# EUROPÄISCHE PATENTSCHRIFT

(11) **EP 2 469 139 B1**
(45) Veröffentlichungstag und Bekanntmachung des Hinweises auf die Patenterteilung: **16.10.2013**
(21) Anmeldenummer: 12160761.8
(22) Anmeldetag: 16.06.2009
(51) Int. Cl.: F16K 37/00, F16K 31/60

(54) **Rückmeldevorrichtung**
Feedback device
Dispositif de retour d'information

(43) Veröffentlichungstag der Anmeldung: 27.06.2012
(62) Teilanmeldung aus: 09162814.9
(73) Patentinhaber: Georg Fischer Rohrleitungssysteme AG, 8201 Schaffhausen (CH)
(72) Erfinder: Bürgi, Stefan, 8254 Basadingen (CH); Stumpp, Jürgen, 79771 Klettgau (DE)
(74) Vertreter: Fenner, Seraina

(56) Entgegenhaltungen:
- WO-A1-2004/070247
- DE-B3- 10 246 912
- GB-A- 1 045 828
- US-A- 3 819 147

## Beschreibung

Die vorliegende Erfindung bezieht sich auf eine elektrische Rückmeldevorrichtung eines Ventils, zur Rückmeldung der Stellung des Handrads des Ventils und somit der Stellung des Absperrgliedes des Ventils, wobei die elektrische Rückmeldevorrichtung im Spindelgehäuse des Gehäuseoberteils des Ventils angeordnet ist.

Im Rohrleitungsbau werden Ventile eingesetzt um Förderströme unterschiedlicher Medien zu regeln. Ventile, die mit Handrädern als Betätigungsvorrichtungen ausgebildet sind, müssen mittels Verriegelungselemente gegen unbefugte Betätigung geschützt werden.
Die US 3819 147 offenbart eine Betätigungseinrichtung bei welcher die axiale Positionsänderung der Ventilachse bzw. des Zustands des Ventils (offen geschlossen) durch Mikroschalter erfasst wird die entlang der Ventilachse angeordnet sind.
Die GB 1 045 828 offenbart eine Bedieneinrichtung mit Drehmomentbegrenzer für ein Ventil.
DE 102 46 912 B3 offenbart ein Ventil, bei welchem der Hub des Antriebs in beiden Endlagen begrenzt werden kann.

Ausgehend von diesem Stand der Technik ist es Aufgabe der Erfindung, eine elektrische Rückmeldevorrichtung zur Rückmeldung der Stellung des Absperrglieds des Ventils anzugeben.

Diese Aufgabe wird gelöst durch dass die elektrische Rückmeldevorrichtung (6) ein Zahnrad (43) aufweist, das über ein Schraubengewinde (42) angetrieben ist, welches am Ring (41) angeordnet ist.

Bevorzugte Weiterbildungen der Erfindung ergeben sich aus den abhängigen Ansprüchen.

Es ist von Vorteil, dass das Ventil nicht von Unbefugten betätigt werden kann. Dies wird dadurch erreicht, dass im Handrad zusammenwirkend mit der Spindel ein einstückiges Verriegelungselement integral angeordnet ist. Das Verriegelungselement ist zur Festlegung der axialen und der radialen Position des Handrades in Bezug auf die Spindel ausgebildet. Das Verriegelungselement weist mindestens einen senkrecht zur Spindelachse ausgebildeten federnden Finger zur Festlegung der axialen Position des Handrades in Bezug auf die Spindel auf und weist einen parallel zur Spindelachse ausgebildeten Schieber zur Festlegung der radialen Position des Handrades in Bezug auf die Spindel auf.

Ein Ausführungsbeispiel der Erfindung wird anhand der Figuren beschrieben. Es zeigen:
Figur 1 eine perspektivische Sicht auf ein Ventil mit der erfindungsgemässen Betätigungsvorrichtung,
Figur 2 eine perspektivische Sicht auf der als Handrad ausgebildeten Betätigungsvorrichtung,
Figur 3 eine perspektivische Sicht auf dem Verriegelungselement und auf dem Gehäuseoberteil des Ventils in einer ersten Endstellung des Verriegelungselements,
Figur 4 eine perspektivische Sicht auf dem Verriegelungselement und auf dem Gehäuseoberteil des Ventils in einer zweiten Endstellung des Verriegelungselements,
Figur 5 eine perspektivische Sicht auf dem Verriegelungselement und auf der Spindel des Ventils in der ersten Endstellung,
Figur 6 eine perspektivische Sicht auf dem Verriegelungselement und auf der Spindel des Ventils in der zweiten Endstellung,
Figur 7 eine perspektivische Sicht auf eine elektrische Rückmeldevorrichtung und
Figur 8 eine Sicht auf die elektrische Rückmeldevorrichtung von Figur 7.

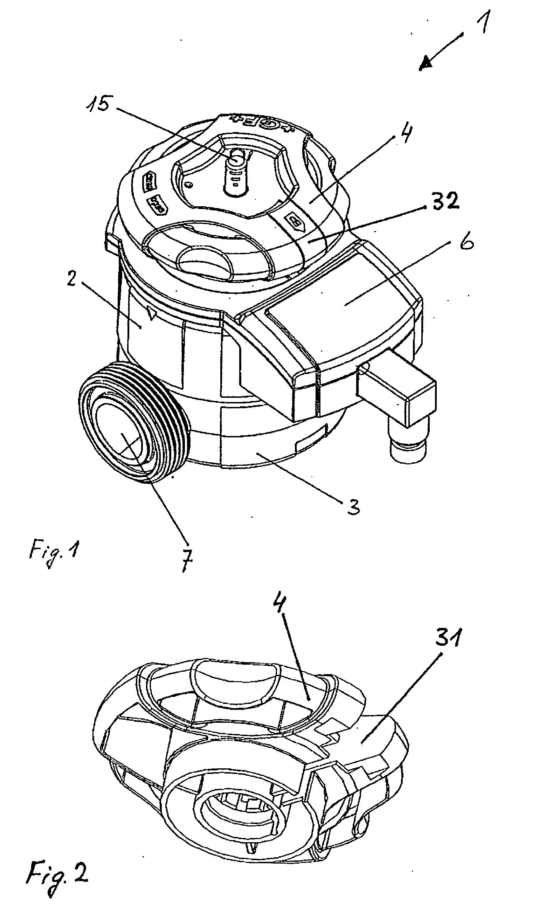

In Figur 1 ist ein Ventil 1, beispielsweise ein Membranventil, perspektivisch dargestellt. Das Ventil 1 besteht aus einem Gehäuseoberteil 2, einem dazu passenden Gehäuseunterteil 3, ein Betätigungsorgan, hier dargestellt als Handrad 4 mit einem Verriegelungselement 32, einer Verlängerung 15 einer Spindel 5 und einer elektrischen Rückmeldevorrichtung 6. Das Gehäuseunterteil 3 weist drei Öffnungen auf, von denen in Figur 1 nur ein Rohrverbindungsstutzen 7 ersichtlich ist.

In Figur 2 ist das Handrad 4 perspektivisch dargestellt. Das Handrad 4 weist eine radial ausgebildete Aussparung 31 auf, in die das Verriegelungselement 32 radial verschiebbar aufgenommen werden kann.

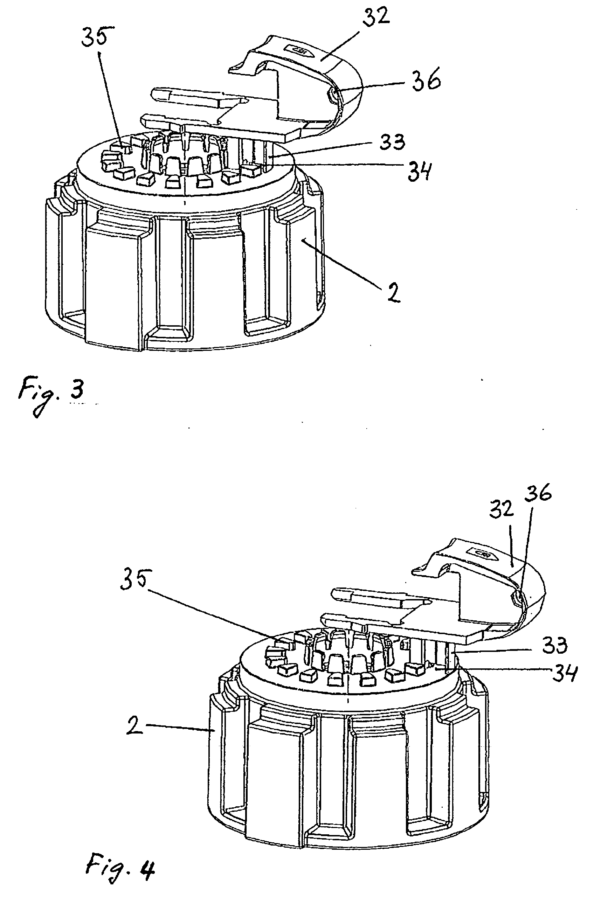

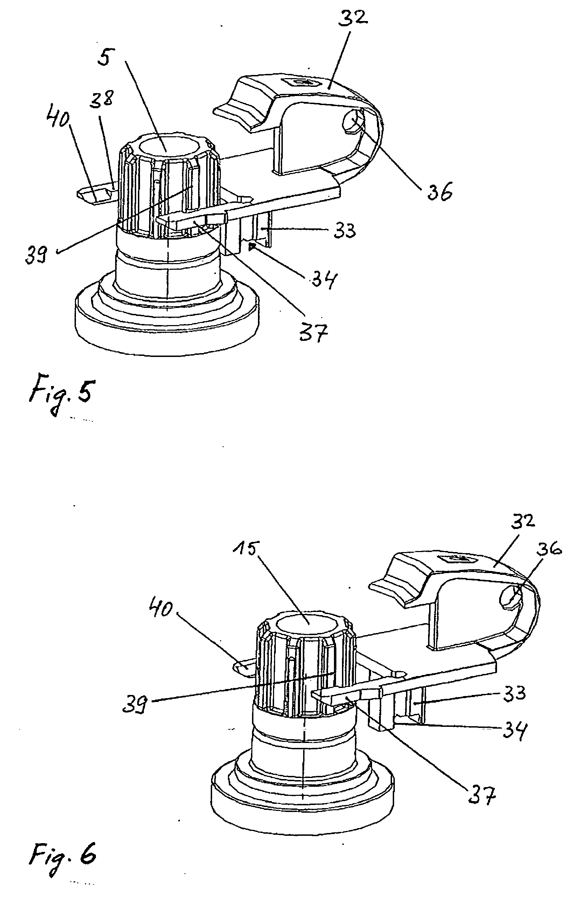

Das Verriegelungselement 32 ist in den Figuren 3 und 4 zusammenwirkend mit dem Gehäuseoberteil 2 und in den Figuren 5 und 6 zusammenwirkend mit der Spindel 5 dargestellt. Das Verriegelungselement 32 weist einen Schieber 33 auf, der sich als eine senkrecht angeordnete und radial verschiebbare Platte vom Verriegelungselement 32 bis zur Oberseite des Gehäuseoberteils 2 erstreckt.

In Figur 3 ist der Schieber 33 in dem zur Spindelachse radial eingeschobenen Zustand, d.h. in dem normalen Betriebszustand des Ventils 1 dargestellt. Der Schieber 33 weist eine Durchlassöffnung 34 auf, durch die die Nocken 35, die auf der Oberseite des Gehäuseoberteils 2 ausgebildet sind, bei der Drehbewegung des Handrades 4 durchgelassen werden. In der Stellung von Figur 3 kann das Ventil 1 mit dem Handrad 4 betätigt werden.

In Figur 4 ist der Schieber 33 im radial ausgeschobenen Zustand dargestellt. In dieser Stellung ist die radiale Position des Handrades 4 festgelegt. Das Handrad 4 kann in dieser Stellung nicht betätigt und die Spindel 5 kann in dieser Stellung nicht gedreht werden. Um das Ventil in der verriegelten Stellung zu fixieren, weist das Verriegelungselement 32 eine Bohrung 36 auf, in die ein hier nicht dargestelltes Vorhängeschloss oder eine andere dazu passende Sicherung eingebracht werden kann. Eine unbefugte Betätigung des Ventils 1 wird verhindert.

Das Verriegelungselement 32 weist, wie in den Figuren 5 und 6 dargestellt, weiterhin zwei federnde Finger 37, 38 auf, die zusammenwirkend mit der Spindel 5 ausgebildet sind. Die federnde Finger 37, 38 greifen ein in weiteren Nocken 39, die am Umfang der Spindel 5 ausgebildet sind. Die federnde Finger 37, 38 verhindern ein unberechtigtes Entfernen des Handrades 4 von der Spindel 5. Die axiale Position des Handrades 4 in Bezug auf die Spindel 5 ist festgelegt. Das Abziehen des Handrades 4 ist nur möglich, wenn das Verriegelungselement 32 sich im normalen Betriebszustand, wie in Figur 5 dargestellt, befindet. Nur mit einem Spezialwerkzeug können die federnde Finger 37, 38 nach Aussen von der Spindel 5 weg bewegt werden, so dass ein Abziehen des Handrades 4 von der Spindel 5 möglich wird. Das Abziehen des Handrades 4 ist nur möglich, wenn das Verriegelungselement 32 gegen radiale Bewegung gesichert ist. Die federnden Finger 37, 38 weisen hierzu schräge Flächen 40 auf, die vom Spezialwerkzeug nach Aussen gedrückt werden können. In Figur 6 ist ersichtlich, wie das Ende des federnden Fingers 37 in einer Aussparung am Nocken 39 der Spindel 5 eingreift, so dass in dieser Betriebstellung ein Abziehen des Handrades 4 verhindert wird. Mit dem hier beschriebenen Handrad 4 mit dem Verriegelungselement 32 kann mit einem einzelnen Bauteil eine vollständige Sicherung des Handrades 4 sowohl in radialer als auch in axialer Richtung erreicht werden.

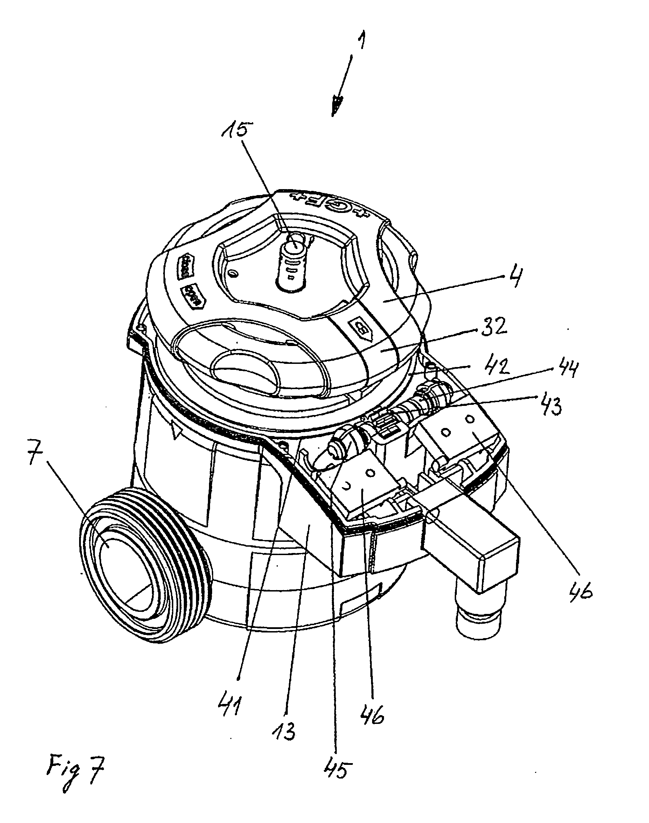

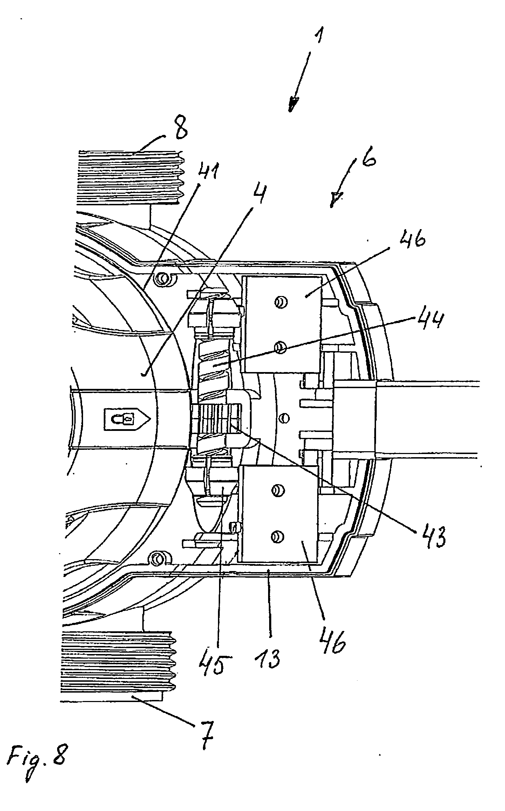

In den Figuren 7 und 8 ist die elektrische Rückmeldevorrichtung 6 zur Rückmeldung der Stellung des Handrades 4 und somit der Stellung des Absperrgliedes des Ventils 1 dargestellt. Die elektrische Rückmeldevorrichtung 6 ist im Spindelgehäuse 13 des Gehäuseoberteils 2 des Ventils 1 angeordnet. Im Gehäuseoberteil 2 ist ein mit der Spindel 5 verbundenen Ring 41 mit einem an dem Ringrand ausgebildeten Schraubengewinde 42 angeordnet. Das Schraubengewinde 42 wirkt über ein Zahnrad 43 zusammen mit einem Schneckenradgetriebe 44. Das Schneckenradgetriebe 44 treibt zwei Schaltnocken 45 an, die eine Linearbewegung ausführen. Hiermit wird erreicht, dass die Drehbewegung des Handrades 4 in einer Linearbewegung der Schaltnocken 45 umgewandelt wird. Die Schaltnocken 45 wirken zusammen mit Mikroschaltern 46, die elektrische Impulse an eine hier nicht dargestellte Stellungsanzeige senden können.

## Patentansprüche

1. Elektrische Rückmeldevorrichtung eines Ventils, (6) zur Rückmeldung der Stellung des Handrads (4) des Ventils (1) und somit der Stellung des Absperrgliedes des Ventils (1), wobei die elektrische Rückmeldevorrichtung (6) im Spindelgehäuse (13) des Gehäuseoberteils (2) des Ventils (1) angeordnet werden kann, **dadurch gekennzeichnet, dass** die elektrische Rückmeldevorrichtung (6) ein Zahnrad (43) aufweist, das über ein Schraubengewinde (42) angetrieben ist, welches an einem Ring (41) angeordnet ist.

2. Elektrische Rückmeldevorrichtung (6) nach Anspruch 1 **dadurch gekennzeichnet, dass** die Drehbewegung des Handrads (4) in eine Linearbewegung eines Schaltnocken (45) umgewandelt wird.

3. Elektrische Rückmeldevorrichtung nach Anspruch 1 oder 2, **dadurch gekennzeichnet, dass** die elektrische Rückmeldevorrichtung (6) mindestens einen Mikroschalter (46) aufweist.

4. Elektrische Rückmeldevorrichtung (6) nach einem der Ansprüche 1 bis 3, **dadurch gekennzeichnet, dass** der Mikroschalter (46) von linear beweglich angeordneten Schaltnocken (45) betätigt wird.

5. Elektrische Rückmeldevorrichtung (6) nach einem der vorangegangenen Ansprüche, **dadurch gekennzeichnet, dass** die elektrische Rückmeldevorrichtung (6) selbstjustierend und nachträglich montierbar ausgebildet ist.

## Claims

1. Electrical feedback device of a valve (6) for feeding back the position of the hand wheel (4) of the valve (I) and thus the position of the shut-off member of the valve (1), wherein the electrical feedback device (6) can be mounted in the spindle housing (13) of the housing upper part (2) of the valve (1), **characterised in that** the electrical feedback device (6) has a gearwheel (43) which is driven by a screw thread (42) which is mounted on a ring (41).

2. Electrical feedback device (6) according to claim 1, **characterised in that** the rotational movement of the hand wheel (4) is converted into a linear movement of a trip cam (45).

3. Electrical feedback device according to claim 1 or 2, **characterised in that** the electrical feedback device (6) has at least one micro switch (46).

4. Electrical feedback device (6) according to one of claims 1 to 3, **characterised in that** the micro switch (46) is actuated by trip cams (45) arranged for linear movement.

5. Electrical feedback device (6) according to one of the preceding claims, **characterised in that** the electrical feedback device (6) is designed to be self-adjusting and can be fitted on at a later stage.

## Revendications

1. Dispositif de retour d'information électrique d'une soupape (6) pour le retour d'information de la position du volant (4) de la soupape (1) et donc de la position de l'organe d'arrêt de la soupape (1), le dispositif de retour d'information électrique (6) pouvant être disposé dans le boîtier de broche (13) de la partie supérieure du boîtier (2) de la soupape (1), **caractérisé en ce que** le dispositif de retour d'information électrique (6) présente une roue dentée (43), qui est entraînée par le biais d'un filet de vis (42) qui est disposé sur une bague (41).

2. Dispositif de retour d'information électrique (6) selon la revendication 1, **caractérisé en ce que** le mouvement de rotation du volant (4) est converti en un mouvement linéaire d'une came de commutation (45).

3. Dispositif de retour d'information électrique selon la revendication 1 ou 2, **caractérisé en ce que** le dispositif de retour d'information électrique (6) présente au moins un minirupteur (46).

4. Dispositif de retour d'information électrique (6) selon l'une quelconque des revendications 1 à 3, **caractérisé en ce que** le minirupteur (46) est actionné par des cames de commutation (45) disposées de manière déplaçable linéairement.

5. Dispositif de retour d'information électrique (6) selon l'une quelconque des revendications précédentes, **caractérisé en ce que** le dispositif de retour d'information électrique (6) est réalisé de manière à pouvoir être auto-ajustable et monté ultérieurement.
